# EUROPÄISCHE PATENTSCHRIFT

(11) **EP 2 621 781 B1**
(45) Veröffentlichungstag und Bekanntmachung des Hinweises auf die Patenterteilung: **11.05.2016**
(21) Anmeldenummer: 11740910.2
(22) Anmeldetag: 01.08.2011
(51) Int. Cl.: B60T 8/44, B60T 13/14

(54) **HILFSKRAFTBREMSSYSTEM FÜR EIN FAHRZEUG UND VERFAHREN ZUM STEUERN DES HILFSKRAFTBREMSSYSTEMS**
POWER ASSISTED BRAKE SYSTEM FOR A VEHICLE AND METHOD FOR CONTROLLING A POWER ASSISTED BRAKE SYSTEM
SYSTÈME DE FREINAGE INDÉPENDANT POUR VÉHICULE ET PROCÉDÉ POUR COMMANDER LE SYSTÈME DE FREINAGE INDÉPENDANT

(30) Priorität: 29.09.2010 DE 102010041642
(43) Veröffentlichungstag der Anmeldung: 07.08.2013
(73) Patentinhaber: Robert Bosch GmbH, 70442 Stuttgart (DE)
(72) Erfinder: GERDES, Manfred, 71665 Vaihingen/Enz (DE); MAYER, Jochen, 70195 Stuttgart-Botnang (DE)
(86) Internationale Anmeldenummer: PCT/EP2011/063236
(87) Internationale Veröffentlichungsnummer: WO 2012/041570

(56) Entgegenhaltungen:
- EP-A1- 0 607 451
- WO-A1-94/27848
- WO-A1-97/18116
- WO-A1-2004/005098
- DE-A1- 10 318 850
- DE-A1- 19 703 776
- JP-A- 59 128 038

## Beschreibung

### Stand der Technik

Die vorliegende Erfindung betrifft ein Bremssystem für ein Fahrzeug.

Grundsätzlich wird bei Bremssystemen für Fahrzeuge in sogenannte Fremdkraftbremssysteme und Hilfskraftbremssysteme unterschieden.

Bei Fremdkraftbremssystemen wird der Hauptbremszylinder, welcher mit den Radbremszylindern hydraulisch verbunden ist, ohne direkte Übertragung der Fußkraft des Fahrers auf diesen zum Beaufschlagen der Radbremszylinder mit Hydraulikflüssigkeit betätigt. Ein solches Fremdkraftbremssystem ist beispielsweise in der DE 10 2004 025 638 A1 beschrieben.

Im Unterschied dazu wird bei Hilfskraftbremssystemen ein Bremskraftverstärker eingesetzt, welcher zusätzlich zu der Fußkraft des Fahrers auf den Hauptbremszylinder wirkt, um die Radbremszylinder mit Hydraulikflüssigkeit zu beaufschlagen. Ein solches Hilfskraftbremssystem ist beispielsweise in der DE 103 18 850 A1 beschrieben.
Bekannt ist daraus ein Hilfskraftbremssystem für ein Fahrzeug, welches Folgendes aufweist: einen Hauptbremszylinder mit einer Kammer, welche mit einem Radbremszylinders zum Abbremsen eines Rads des Kraftfahrzeugs hydraulisch verbunden ist; eine hydraulische Betätigungseinrichtung, welche einen Kolben des Hauptbremszylinders betätigt, um dadurch Hydraulikflüssgkeit in der Kammer zu drücken; einen Druckspeicher, welcher Hydraulikflüssigkeit unter Druck speichert und der Betätigungseinrichtung zum Betätigen des Kolbens des Hauptbremszylinders zuführt; eine Pumpe, welche Hydraulikflüssigkeit aus einem Tank dem Niederdruckspeicher zuführt; und einer Antriebseinrichtung, welche die Pumpe antreibt.

Die Offenlegungsschrift DE 197 03 776 A1 offenbart einen Bremsdruckgeber für eine hydraulische Kraftfahrzeugbremsanlage mit Bremskraftverstärkung, bei der die vom Fahrer aufgebrachte Pedalkraft auf einen Verstärkerkolben übertragbar ist, der zusätzlich durch den Druck einer Verstärkerpumpe beaufschlagbar ist. Die am Verstärkerkolben wirksam werdende Kraft wird auf den Druckkreiskolben eines mit den Radbremsen (9) des Fahrzeugs verbundenen Hauptzylinders (2) übertragen. Der von der Verstärkerpumpe in der Verstärkerkammer aufbaubare Druck ist durch ein Drucksteuerventil steuerbar.

Die Schrift WO 94/27848 A1 betrifft eine Bremsanlage für Kraftfahrzeuge mit einer Einrichtung zum Regeln sowohl des Brems- als auch des Antriebsschlupfes, bestehend aus einem pedalbetätigbaren ersten Bremsdruckgeber sowie einem unabhängig von der Pedalbetätigung steuerbaren zweiten Bremsdruckgeber, einem dazwischen geschalteten, hydraulisch betätigbaren Schaltventil, einem Trennventil zur Trennung der Ausgänge der Bremsdruckgeber, Radbremszylindern, die mit beiden Bremsdruckgebern verbindbar sind und denen je ein Ein- und ein Auslaßventil vorgeschaltet sind, sowie einem Niederdruckspeicher, der einerseits mit den Radbremszylindern und andererseits mit dem zweiten Bremsdruckgeber in Verbindung steht.

### Vorteile der Erfindung

Weiter ist erfindungsgemäß ein zweites Steuerventil in einer hydraulischen Verbindung zwischen der Betätigungseinrichtung und dem Tank vorgesehen, mit dem Druckspitzen stark abgeschwächt werden.

Das in dem Anspruch 1 definierte Hilfskraftbremssystem sowie das in Anspruch 5 definierte Verfahren bieten gegenüber herkömmlichen Lösungen den Vorteil, dass ein Niederdruckspeicher vorgesehen ist, welcher Hydraulikflüssigkeit unter Druck speichert und der Betätigungseinrichtung zum Betätigen des Kolbens des Hauptbremszylinders zuführt. Ein solcher Niederdruckspeicher ist vergleichsweise kostengünstig und benötigt nur wenig Platz. Der Niederdruckspeicher unterstützt die Pumpe samt der diese antreibenden Antriebseinrichtung insbesondere zu den Zeiten, wenn die erste Pumpe noch keine Hydraulikflüssigkeit fördern kann, da die Trägheit der Antriebseinrichtung noch nicht überwunden ist.

Unter einem "Niederdruckspeicher" ist vorliegend ein Druckspeicher zu verstehen, welcher einen maximalen Druck speichert, welcher deutlich kleiner ist als derjenige, der zur Vollverzögerung des Fahrzeuges an der Betätigungseinrichtung notwendig ist, und ein maximales hydraulisches Volumen beinhaltet, welches deutlich kleiner ist als jenes, das zur vollständigen Befüllung der Betätigungseinrichtung notwendig ist.

Die in den jeweiligen Unteransprüchen aufgeführten Merkmale beziehen sich auf vorteilhafte Weiterbildungen und Verbesserungen des Gegenstands der Erfindung.

### Kurze Beschreibung der Zeichnung

Ausführungsbeispiele der Erfindung sind in der einzigen Figur der Zeichnung dargestellt und in der nachfolgenden Beschreibung näher erläutert. Die Figur zeigt schematisch ein Bremssystem gemäß einem Ausführungsbeispiel der vorliegenden Erfindung.

### Ausführungsformen der Erfindung

In der Figur bezeichnen gleiche Bezugsziffern gleiche oder funktionsgleiche Elemente, soweit nichts Gegenteiliges angegeben ist.

Die Figur zeigt schematisch ein Hilfskraftbremssystem 1 gemäß einem Ausführungsbeispiel der vorliegenden Erfindung.

Das Bremssystem 1 wird bevorzugt bei einem nicht weiter dargestellten Kraftfahrzeug eingesetzt.

Das Bremssystem 1 weist einen Hauptbremszylinder 2 mit zwei Kammern 3 auf, welche jeweils mit zwei Radbremszylindern 7 zum Abbremsen von Rädern 4 des Kraftfahrzeugs mittels Leitungen 5 hydraulisch verbunden sind. Der Hauptbremszylinder 2 ist bevorzugt ein Tandem Master Cylinder (TMC). Jede der Leitungen 5 ist mittels eines Einlassventils 6 mit einem Radbremszylinder 7 verbunden. Die Einlassventile 6 können als 2/2-Wegeventile ausgebildet sein, welche stromlos offen sind, wie in der Figur gezeigt. Weiterhin sind Rückschlagventile 18 in parallel zu den Einlassventilen 6 vorgesehen. Jede der Leitungen 5 kann verzweigt ausgebildet sein, um zwei Radbremszylinder 7 mit Hydraulikflüssigkeit zu versorgen. Die Radbremszylinder 7 sind ferner - nachfolgende Ausführungen beziehen sich dem besseren Verständnis halber lediglich auf den in der Figur links gezeigten Bremskreis - mittels Auslassventilen 8, einem Niederdruckspeicher 9, einer Pumpe 10 und einer Leitung 19 mit der Kammer 3 verbunden. Die Auslassventile 8 können als 2/2-Wegeventile ausgebildet sein, welche stromlos geschlossen sind, wie in der Figur gezeigt. Die Pumpe 10 fördert in einem Antiblockiermodus des Bremssystems 1 Hydraulikflüssigkeit in die Kammern 3.

Das Bremssystem 1 weist ferner eine hydraulische Betätigungseinrichtung 11 auf, welche einen Kolben 12 des Hauptbremszylinders 2 betätigt, um dadurch Hydraulikflüssigkeit in den Kammern 3 zu bedrucken. Die hydraulische Betätigungseinrichtung 11 ist vorliegend als ein Bremskraftverstärker ausgeführt, welcher eine vom Fahrer des Kraftfahrzeugs mittels eines Bremspedals 13 auf den Kolben 12 aufgebrachte Fußkraft verstärkt. Demnach handelt es sich um ein Hilfskraftbremssystem.

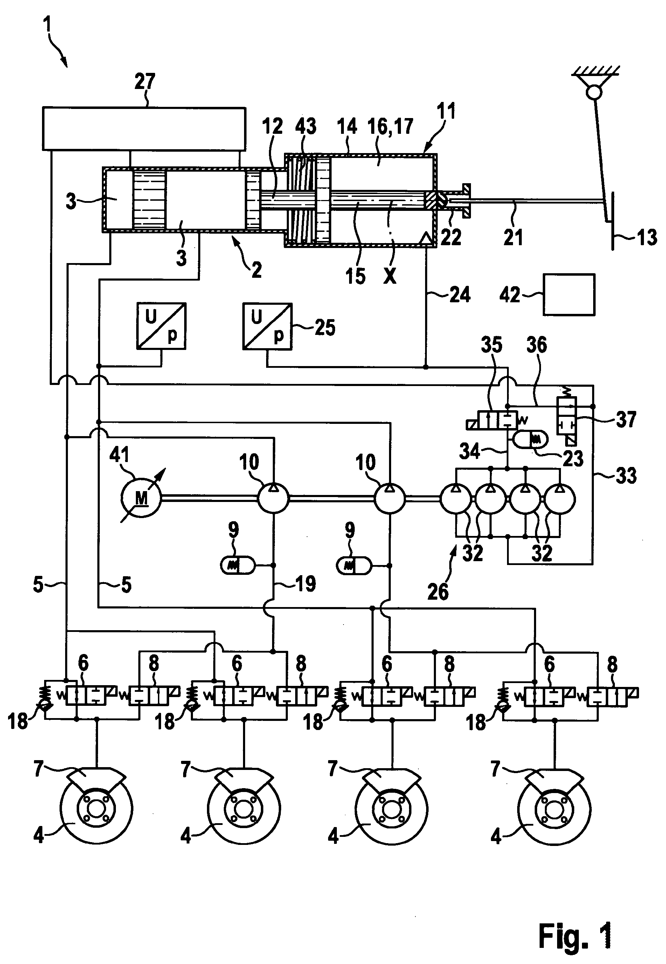

Die Betätigungseinrichtung 11 weist einen Zylinder 14 auf, in welchem ein Kolben 15 geführt ist. Eine zwischen dem Zylinder 14 und dem Kolben 15 gebildete Kammer 16 wird mit Hydraulikflüssigkeit 17, siehe Fig. 1, beaufschlagt, wodurch der Kolben 15 in seiner Längsrichtung verschoben wird und auf den Kolben 12 des Hauptbremszylinders 2 wirkt. Eine Pedalstange 21 verbindet das Pedal 13 mit dem Kolben 15. Somit kann der Fahrer unabhängig von der Betätigungseinrichtung 11 eine Kraft auf den Kolben 12 des Hauptbremszylinders 2 aufbringen, wodurch die Radbremszylinder 7 betätigt werden. Diese ist insbesondere im Hinblick auf einen etwaigen Ausfall der Betätigungseinrichtung 11 vorteilhaft.

Ein beispielsweise zwischen der Pedalstange 21 und dem Kolben 15 angeordndeter Pedalsensor 22 sensiert die vom Fahrer aufgebrachte Pedalkraft und damit dessen Bremswunsch. Der Sensor 22 sowie das zugrundeliegende Messprinzip kann beispielsweise wie in der DE 10 2008 041 349 A1 beschrieben vorgesehen sein.

Weiterhin weist das Bremssystem 1 einen Niederdruckspeicher 23 auf, welcher Hydraulikflüssigkeit unter Druck speichert und der Betätigungseinrichtung 11 zum Betätigen des Kolbens 12 des Hauptbremszylinders 2 zuführt.

Der Niederdruckspeicher 23 ist beispielsweise als ein Kolbenspeicher ausgebildet. Es ist jedoch auch denkbar, einen andersartigen Niederdruckspeicher einzusetzen. Der Niederdruckspeicher 23 ist zur Bereitstellung eines Drucks, der 5 bis 30% kleiner ist als derjenige, der zu einer Vollverzögerung des Fahrzeuges an der Betätigungseinrichtung 11 (also deren Kammer 16) notwendig ist, ausgebildet und nimmt ein Volumen auf, das 5 bis 30% geringer ist als dasjenige, das zur vollständigen Befüllung der Betätigungseinrichtung 11 (also deren Kammer 16) notwendig ist. Der Niederdruckspeicher 23 ist mittels einer Leitung 24 mit der Kammer 16 der Betätigungseinrichtung 11 hydraulisch verbunden. Ein Drucksensor 25 misst den Druck in der Leitung 24 und damit den Druck in der Kammer 16.

Das Bremssystem 1 umfasst weiterhin eine Pumpe 26, welche Hydraulikflüssigkeit aus einem Tank 27 dem Niederdruckspeicher 23 zuführt. Die Pumpe 26 kann sich wiederum aus mehreren, beispielsweise vier versetzt angeordneten Einzelpumpen 32 zusammensetzten. Dies hat den Zweck den von der Pumpe 26 erzeugten Druckverlauf zu glätten. Die Pumpe 26 ist saugseitig mit dem Tank 27 mittels einer Leitung 33 und druckseitig mit dem Niederdruckspeicher 23 mittels einer Leitung 34 hydraulisch verbunden. Die Leitung 34 ist mit der Leitung 24 mittels eines ersten Steuerventils 35 verbunden, d.h., das erste Steuerventil 35 verbindet den Niederdruckspeicher 23 und die Druckseite der Pumpe 26 mit der Kammer 16 der Betätigungseinrichtung 11. Das erste Steuerventil 35 kann beispielsweise als 2/2-Wegeventil ausgeführt sein, welches stromlos geschlossen ist, wie in der Figur dargestellt. Außerdem verbinden eine Leitung 36 und ein zweites Steuerventil 37 die Leitung 24 mit der Leitung 33, d.h., das zweite Steuerventil 37 verbindet die Kammer 16 der Betätigungseinrichtung 11 mit dem Tank 27. Das zweite Steuerventil 37 kann beispielsweise als 2/2-Wegeventil ausgeführt sein, welches stromlos offen ist, wie in der Figur dargestellt.

Die Pumpe 26 wird von einer Antriebseinrichtung in Form eines Elektromotors 41 angetrieben. Der Elektromotor 41 treibt die Pumpe 26 zum Beaufschlagen der Kammer 16 der Betätigungseinrichtung 11 mit Hydraulikflüssigkeit während eines Bremsintervalls an, wenn also die Radbremszylinder 7 betätigt werden sollen. In diesem Fall ist das erste Steuerventil 35 geöffnet und das zweite Steuerventil 37 geschlossen. Die Hydraulikflüssigkeit fließt dann von der Pumpe 26 durch das Steuerventil 35 in die Kammer 16, wodurch letztendlich die Radbremszylinder 7 betätigt werden. Ferner kann eine Steuereinrichtung (Electronic Control Unit, kurz "ECU") 42 des Bremssystems 1 dazu eingrichtet sein, das zweite Steuerventil 37 derart zu steuern, dass Druckschwankungen, welche sich im Betrieb der Pumpe 26 ergeben, geglättet werden. Dies geschieht dadruch, dass das zweite Steuerventil 37 kurzzeitig geöffnet wird und somit Druckspitzen an den Tank 27 abgegeben werden.

Am Ende des vorstehend beschriebenen Bremsintervalls, wird der Elektromotor 41 mit keinem weiteren Strom beaufschlagt. Aufgrund seiner Trägheit weist der Elektromotor 41 einen Nachlauf auf. Dieser Nachlauf wird dazu genützt, um die erste Pumpe 26 anzutreiben und dadurch den Niederdruckspeicher 23 zu befüllen. Dazu wird das erste Steuerventil 35 zu Beginn des Nachlaufs geschlossen. Dies ist energieeffizient. Außerdem wird somit keine zusätzliche Pumpe benötigt, um den Niederdruckspeicher 23 zu befüllen.

Außerdem kann die Pumpe 26 den Niederdruckspeicher 23 während eines Bremssystem-Funktionstestintervalls befüllen. Mit "Funktionstestintervall" ist vorliegend ein Zustand des Bremssystems gemeint, in welchem dessen Funktionstüchtigkeit getestet wird. Ein entsprechender Funktionstest wird typischerweise bei Kraftfahrzeugen vor und/oder nach dem Anlassen des Verbrennungsmotors durchgeführt. Bestandteil eines solchen Funktionstests ist es auch den Elektroktomotor 41 und damit die Pumpe 26 zu betätigen. Die dabei geförderte Hydraulikflüssigekeit wird in dem Niederdruckspeicher 23 gespeichert. Dazu wird das erste Steuerventil 35 geschlossen.

Zum Erzeugen eines maximalen Bremsmoments steuert die Steuereinrichtung 42 das erste Steuerventil 35 und die Pumpe 26 derart, dass die Pumpe 26 am Ende der Druckaufbauphase den überwiegenden Teil, also größer 50%, bevorzugt größer 70% des in der Kammer 16 anstehenden Drucks in der Hydraulikflüssigkeit erzeugt. Der kleinere Teil, also kleiner 50%, bzw. kleiner 30% des Drucks wird von dem Niederdruckspeicher 23 erzeugt. Beispielsweise erzeugt der Niederdruckspeicher 23 am Ende der Druckaufbauphase noch einen Druck von 10 bar, während die Pumpe 26 einen Druck von 60 bar erzeugt. Zu Beginn der Druckaufbauphase jedoch erzeugt der Niederdruckspeicher 23 beispielsweise einen Druck von 20 bar, während die Pumpe 26 noch praktisch keinen Druck erzeugt. Insbesondere am Anfang der Druckaufbauphase, während die Pumpe 26 auf Grund der Trägheit des Elektromotors 41 noch keinen relevanten Druck erzeugt, unterstützt der Niederdruckspeicher 23 den Fahrer, indem das erste Steuerventil 35 geöffnet und dadurch Hydraulikflüssigkeit aus dem Niederdruckspeicher 23 der Kammer 16 zugeführt wird.

Nachfolgend wird dem besseren Verständnis halber ein Bremszyklus kurz erläutert:

Nimmt der Fahrer den Fuß auf das Bremspedal 13, so lenkt er damit den Pedalsensor 22 unmittelbar aus. Aufgrund dieses Signals wird das erste Steuerventil 35 bestromt, d.h. geöffnet, und das zweite Steuerventil 37 bestromt, d.h. geschlossen. Der Elektromotor 41 wird ebenfalls bestromt, falls er nicht schon vorher bestromt wurde. Die somit an der Kammer 16 der Betätigungseinrichtung 11 anstehende Hydraulikflüssgkeit betätigt zusammen mit der Fahrerfußkraft den Hauptbremszylinder 2, wodurch in den Leitungen 5 und damit an den Radbremszylindern 7 ein Bremsdruck aufgebaut wird.

Tritt der Fahrer jetzt nicht weiter nach, so bleibt dessen Bremswunsch, der durch den Pedalsensor 22 sensiert wird, konstant. Daraufhin wird die Bestromung der Pumpe 26 reduziert, d.h. die Pumpenleistung wird reduziert, der weitere Druckanstieg bleibt aus. Das zweite Steuerventil 37 wird dabei abhängig vom anstehenden Druck, gemessen mittels des Drucksensor 25, in die Druckregelfunktion überführt, d.h. die Bestromung des zweiten Steuerventils 37 wird so weit reduziert, dass der Druck in der Kammer 16 der Betätigungseinrichtung 11 in etwa gleich gehalten wird. Tritt der Fahrer am Bremspedal 13 nach, wird das zweite Steuerventil 37 stärker bestromt, soweit die erste Pumpe 26 den in der Kammer 16 anstehenden Druck noch weiter erhöhen kann. Kurzzeitigen Drucküberhöhungen auf Grund der vorstehend beschriebenen Druckschwankungen der Pumpe 26 wird mittels weiteren Öffnens des zweiten Steuerventils 37 entgegengewirkt, was wiederum mittels einer entsprechenden Ansteuerung desselben durch die Steuereinrichtung 42 geschieht, wodurch Druckspitzen stark abgeschwächt werden und vom Fahrer nicht mehr spürbar sind. Die Druckspitzen werden außerdem durch den Niederdruckspeicher 23 gemindert, welcher diese elastisch aufnimmt.

Löst der Fahrer den Fuß von dem Bremspedal 13, wird dies am Pedalsensor 22 erkannt und die Bestromung des zweiten Steuerventils 37 und der Pumpe 26 reduziert. Das erste Steuerventil 35 wird geschlossen. Der in dem Niederdruckspeicher 23 verbleibende Restdruck wird zur nächsten Bremsung verwendet. Durch den abfallenden Druck in der Kammer 16 schieben eine Feder 43 der Betätigungseinrichtung 11 und der Druck in den Leitungen 5 die Kolben 12, 15 und damit auch das Bremspedal 13 zurück in die Ausgangslage.

Obwohl die Erfindung anhand von Ausführungsbeispielen vorliegend konkret beschrieben wurde, ist sie darauf nicht beschränkt, sondern auf vielfältige Art und Weise modifizierbar. Die für das erfindungsgemäße Hilfskraftbremssystem beschriebenen Weiterbildungen und Ausführungsbeispiele gelten entsprechend für das erfindungsgemäße Verfahren. Ferner sei darauf hingewiesen, dass "ein" vorliegend keine Vielzahl ausschließt.

## Patentansprüche

1. Hilfskraftbremssystem (1) für ein Fahrzeug, aufweisend:
einen Hauptbremszylinder (2) mit einer Kammer (3), welche mit einem Radbremszylinder (7) zum Abbremsen eines Rads (4) des Fahrzeugs hydraulisch verbunden ist;
eine hydraulische Betätigungseinrichtung (11), welche einen Kolben (12) des Hauptbremszylinders (2) betätigt, um dadurch Hydraulikflüssigkeit in der Kammer (3) unter Druck zu setzten, wobei die hydraulische Betätigungseinrichtung (11) als ein Bremskraftverstärker ausgebildet ist, welcher eine von dem Fahrer mechanisch auf den Kolben (12) des Hauptbremszylinders (2) aufgebrachte Kraft verstärkt;
einen Niederdruckspeicher (23), welcher Hydraulikflüssigkeit unter Druck speichert und der hydraulischen Betätigungseinrichtung (11) zum Betätigen des Kolbens (12) des Hauptbremszylinders (2) zuführt;
eine Pumpe (26), welche Hydraulikflüssigkeit aus einem Tank (27) dem Niederdruckspeicher (23) zuführt, wobei die Pumpe (26) an ihrer Druckseite mit einem ersten Steuerventil (35) und dem Niederdruckspeicher (23) und das erste Steuerventil (35) weiter mit der hydraulischen Betätigungseinrichtung (11) hydraulisch verbunden ist, und wobei der Tank (27) mittels eines zweiten Steuerventils (37) mit der hydraulischen Betätigungseinrichtung (11) hydraulisch verbunden ist; und
eine Antriebseinrichtung (41), welche die Pumpe (26) antreibt;
**dadurch gekennzeichnet, dass**
das Hilfskraftbremssystem eine Steuereinrichtung (42) umfasst, welche zum Erzeugen eines Bremsmoments das erste Steuerventil (35) öffnet, um dadurch der hydraulischen Betätigungseinrichtung (11) Hydraulikflüssigkeit zuzuführen, und gleichzeitig das zweite Steuerventil (37) für ein Ausgleichen von Druckspitzen so steuert, dass Druckspitzen stark abgeschwächt werden.

2. Hilfskraftbremssystem nach Anspruch 1, wobei die als Elektromotor (41) ausgebildete Antriebseinrichtung die Pumpe (26) zum Beaufschlagen der hydraulischen Betätigungseinrichtung (11) mit Hydraulikflüssigkeit während eines Bremsintervalls antreibt und die Pumpe (26) während eines Nachlaufs des Elektromotors (41) im Anschluss an das Bremsintervall den Niederdruckspeicher (23) füllt.

3. Hilfskraftbremssystem nach Anspruch 1 oder 2, wobei die Pumpe (26) während eines Bremssystem-Funktionstestintervalls den Niederdruckspeicher (23) füllt.

4. Hilfskraftbremssystem nach einem der vorhergehenden Ansprüche, wobei die Steuereinrichtung (42) zum Erzeugen eines maximalen Bremsmoments das erste Steuerventil (35), das zweite Steuerventil ( 37) und die Antriebseinrichtung (41) der Pumpe (26) derart steuert, dass die Pumpe (26) am Ende der Druckaufbauphase den überwiegenden Teil des an der hydraulischen Betätigungseinrichtung (11) anstehenden Drucks in der Hydraulikflüssigkeit erzeugt.

5. Verfahren zum Steuern eines Hilfskraftbremssystems (1) für ein Fahrzeug, mit den Schritten:
Zuführen von Hydraulikflüssigkeit an einen Niederdruckspeicher (23) mittels einer Pumpe (26), welche an ihrer Druckseite mit einem ersten Steuerventil (35) und dem Niederdruckspeicher (23) und an ihrer Förderseite mit einem Tank (27) hydraulisch verbunden ist;
Zuführen von Hydraulikflüssigkeit aus dem Niederdruckspeicher (23) an eine hydraulische Betätigungseinrichtung (11) durch Öffnen des ersten Steuerventils (35), welches mit der hydraulischen Betätigungseinrichtung (11) hydraulisch verbunden ist; und
Betätigen eines Kolbens (12) eines Hauptbremszylinders (2) mittels der hydraulischen Betätigungseinrichtung (11), um dadurch Hydraulikflüssigkeit aus einer Kammer (3) des Hauptbremszylinders (2) einem Radbremszylinder (7) zum Abbremsen eines Rads (4) des Fahrzeugs zuzuführen, wobei die hydraulische Betätigungseinrichtung (11) als ein Bremskraftverstärker ausgebildet ist, welcher eine von dem Fahrer mechanisch auf den Kolben (12) des Hauptbremszylinders (2) aufgebrachte Kraft verstärkt;
**gekennzeichnet durch** den Schritt:
Ausgleichen von Druckspitzen während des Zuführens von Hydraulikflüssigkeit aus dem Niederdruckspeicher (23) an die hydraulische Betätigungseinrichtung (11) mittels eines zweiten Steuerventils (37), über welches der Tank (27) mit der hydraulischen Betätigungseinrichtung (11) hydraulisch verbunden ist, wodurch Druckspitzen stark abgeschwächt werden.

6. Verfahren nach Anspruch 5, wobei die Pumpe (26) zum Beaufschlagen der hydraulischen Betätigungseinrichtung (11) mit Hydraulikflüssigkeit während eines Bremsintervalls von der als Elektromotor (41) ausgebildeten Antriebseinrichtung angetrieben und der Niederdruckspeicher (23) von der Pumpe (26) während eines Nachlaufs des Elektromotors (41) im Anschluss an das Bremsintervall befüllt wird.

## Claims

1. Power-assisted brake system (1) for a vehicle, having:
a master brake cylinder (2) with a chamber (3) which is hydraulically connected to a wheel brake cylinder (7) for braking a wheel (4) of the vehicle;
a hydraulic activation device (11) which activates a piston (12) of the master brake cylinder (2) in order as a result to place hydraulic fluid in the chamber (3) under pressure, wherein the hydraulic activation device (11) is embodied as a brake booster which boosts a force which is mechanically applied to the piston (12) of the master brake cylinder (2) by the driver;
a low-pressure accumulator (23) which stores hydraulic fluid under pressure and feeds it to the hydraulic activation device (11) in order to activate the piston (12) of the master brake cylinder (2);
a pump (26) which feeds hydraulic fluid from a tank (27) to the low-pressure accumulator (23), wherein the pump (26) is hydraulically connected on its pressure side to a first control valve (35) and to the low-pressure accumulator (23), and the first control valve (35) is also hydraulically connected to the hydraulic activation device (11), and wherein the tank (27) is hydraulically connected to the hydraulic activation device (11) by means of a second control valve (37); and
a drive device (41) which drives the pump (26);
**characterized in that**
the power-assisted brake system comprises a control device (42) which opens the first control valve (35) in order to generate a braking torque, in order as a result to feed hydraulic fluid to the hydraulic activation device (11) and at the same time controls the second control valve (37) in order to compensate pressure peaks, in such a way that pressure peaks are attenuated to a high degree.

2. Power-assisted brake system according to Claim 1, wherein the drive device which is embodied as an electric motor (41) drives the pump (26) to supply hydraulic fluid to the hydraulic activation device (11) during a braking interval, subsequent to the braking interval the pump (26) fills the low-pressure accumulator (23) during a run-on of the electric motor (41).

3. Power-assisted brake system according to Claim 1 or 2, wherein the pump (26) fills the low-pressure accumulator (23) during a brake-system functional test interval.

4. Power-assisted brake system according to one of the preceding claims, wherein in order to generate a maximum braking torque the control device (42) controls the first control valve (35), the second control valve (37) and the drive device (41) of the pump (26) in such a way that at the end of the pressure build-up phase the pump (26) generates the major part of the pressure in the hydraulic fluid which is present at the hydraulic activation device (11).

5. Method for controlling a power-assisted brake system (1) for a vehicle, having the steps:
feeding in hydraulic fluid to a low-pressure accumulator (23) by means of a pump (26) which is hydraulically connected on its pressure side to a first control valve (35) and to the low-pressure accumulator (23) and on its feed side to a tank (27);
feeding in hydraulic fluid from the low-pressure accumulator (23) to a hydraulic activation device (11) by opening the first control valve (35) which is hydraulically connected to the hydraulic activation device (11); and
activating a piston (12) of a master brake cylinder (2) by means of the hydraulic activation device (11) in order as a result to feed hydraulic fluid from a chamber (3) of the master brake cylinder (2) to a wheel brake cylinder (7) in order to brake a wheel (4) of the vehicle, wherein the hydraulic activation device (11) is embodied as a brake booster which boosts a force which is applied mechanically to the piston (12) of the master brake cylinder (2) by the driver;
**characterized by** the step:
compensating pressure peaks during the feeding in of hydraulic fluid from the low-pressure accumulator (23) to the hydraulic activation device (11) by means of a second control valve (37) via which the tank (27) is hydraulically connected to the hydraulic activation device (11), as a result of which pressure peaks are attenuated to a high degree.

6. Method according to Claim 5, wherein the pump (26) is driven to supply the hydraulic activation device (11) with hydraulic fluid during a braking interval by the drive device which is embodied as an electric motor (41) and subsequent to the braking interval the low-pressure accumulator (23) is filled by the pump (26) during a run-on of the electric motor (41).

## Revendications

1. Système de freinage assisté (1) pour un véhicule, présentant :
un cylindre de frein principal (2) avec une chambre (3) qui est connectée hydrauliquement à un cylindre de frein de roue (7) pour freiner une roue (4) du véhicule,
un dispositif d'actionnement hydraulique (11) qui actionne un piston (12) du cylindre de frein principal (2) afin de mettre sous pression du liquide hydraulique dans la chambre (3), le dispositif d'actionnement hydraulique (11) étant réalisé sous forme d'amplificateur de la force de freinage qui amplifie une force appliquée mécaniquement par le conducteur sur le piston (12) du cylindre de frein principal (2) ;
un accumulateur basse pression (23) qui accumule du liquide hydraulique sous pression et qui l'achemine au dispositif d'actionnement hydraulique (11) pour actionner le piston (12) du cylindre de frein principal (2) ;
une pompe (26) qui achemine du liquide hydraulique depuis un réservoir (27) à l'accumulateur basse pression (23), la pompe (26) étant connectée hydrauliquement au niveau de son côté pression à une première soupape de commande (35) et à l'accumulateur basse pression (23) et la première soupape de commande (35) étant à son tour connectée hydrauliquement au dispositif d'actionnement hydraulique (11), et le réservoir (27) étant connecté hydrauliquement au moyen d'une deuxième soupape de commande (37) au dispositif d'actionnement hydraulique (11) ; et
un dispositif d'entraînement (41) qui entraîne la pompe (26) ;
**caractérisé en ce que**
le système de freinage assisté comprend un dispositif de commande (42) qui ouvre la première soupape de commande (35) pour générer un couple de freinage afin d'acheminer ainsi du liquide hydraulique au dispositif d'actionnement hydraulique (11), et commande simultanément la deuxième soupape de commande (37) pour compenser les pointes de pression, de telle sorte que les pointes de pression soient fortement affaiblies.

2. Système de freinage assisté selon la revendication 1, dans lequel le dispositif d'entraînement réalisé sous forme de moteur électrique (41) entraîne la pompe (26) pour solliciter le dispositif d'actionnement hydraulique (11) avec du fluide hydraulique pendant un intervalle de freinage, et la pompe (26) remplit l'accumulateur basse pression (23) pendant que le moteur électrique (41) continue de tourner par inertie après l'intervalle de freinage.

3. Système de freinage assisté selon la revendication 1 ou 2, dans lequel la pompe (26) remplit l'accumulateur basse pression (23) pendant un intervalle d'essai de fonctionnement du système de freinage.

4. Système de freinage assisté selon l'une quelconque des revendications précédentes, dans lequel le dispositif de commande (42), pour générer un couple de freinage maximum, commande la première soupape de commande (35), la deuxième soupape de commande (37) et le dispositif d'entraînement (41) de la pompe (26) de telle sorte que la pompe (26), à la fin de la phase d'augmentation de pression, génère la majeure partie de la pression dans le liquide hydraulique s'appliquant au dispositif d'actionnement hydraulique (11).

5. Procédé de commande d'un système de freinage assisté (1) pour un véhicule, comprenant les étapes suivantes :
alimentation en liquide hydraulique d'un accumulateur basse pression (23) au moyen d'une pompe (26) qui est connectée hydrauliquement au niveau de son côté pression à une première soupape de commande (35) et à l'accumulateur basse pression (23) et au niveau de son côté refoulement à un réservoir (27) ;
alimentation en liquide hydraulique provenant de l'accumulateur basse pression (23) d'un dispositif d'actionnement hydraulique (11) par ouverture de la première soupape de commande (35) qui est connectée hydrauliquement au dispositif d'actionnement hydraulique (11) ; et
actionnement d'un piston (12) d'un cylindre de frein principal (2) au moyen du dispositif d'actionnement hydraulique (11) afin d'acheminer ainsi du liquide hydraulique provenant d'une chambre (3) du cylindre de frein principal (2) à un cylindre de frein de roue (7) pour freiner une roue (4) du véhicule, le dispositif d'actionnement hydraulique (11) étant réalisé sous la forme d'un amplificateur de force de freinage qui amplifie une force appliquée mécaniquement par le conducteur sur le piston (12) du cylindre de frein principal (2) ;
**caractérisé par** l'étape suivante :
compensation de pointes de pression pendant l'alimentation en liquide hydraulique provenant de l'accumulateur basse pression (23) du dispositif d'actionnement hydraulique (11) au moyen d'une deuxième soupape de commande (37) par le biais de laquelle le réservoir (27) est connecté hydrauliquement au dispositif d'actionnement hydraulique (11), de sorte que les pointes de pression soient fortement affaiblies.

6. Procédé selon la revendication 5, dans lequel la pompe (26) est entraînée pour solliciter le dispositif d'actionnement hydraulique (11) avec du liquide hydraulique pendant un intervalle de freinage par le dispositif d'entraînement réalisé sous forme de moteur électrique (41) et l'accumulateur basse pression (23) est rempli par la pompe (26) pendant que le moteur électrique (41) continue de tourner par inertie suite à l'intervalle de freinage.
